Europäisches Patentamt

European Patent Office

Office européen des brevets

(11) Veröffentlichungsnummer: **0 090 350 B1**

(12) **EUROPÄISCHE PATENTSCHRIFT**

(45) Veröffentlichungstag der Patentschrift:
06.08.86

(21) Anmeldenummer: 83102907.9

(22) Anmeldetag: 24.03.83

(51) Int. Cl.⁴: **C 01 B 3/50, C 01 B 3/00**

(54) **Nicht poröse Wasserstoffdiffusions-Membran und deren Verwendung.**

(30) Priorität: **26.03.82 DE 3211193**

(43) Veröffentlichungstag der Anmeldung:
**05.10.83 Patentblatt 83/40**

(45) Bekanntmachung des Hinweises auf die Patenterteilung:
**06.08.86 Patentblatt 86/32**

(84) Benannte Vertragsstaaten:
**DE FR GB**

(56) Entgegenhaltungen:
**FR - A - 2 218 281**

(73) Patentinhaber: **Kernforschungsanlage Jülich Gesellschaft mit beschränkter Haftung, Postfach 1913, D-5170 Jülich 1 (DE)**

(72) Erfinder: **Behr, Friedrich, Dr., Bredeneyer Strasse 26, D-4300 Essen 1 (DE)**
Erfinder: **Kügler, Bernd, Schlossweiherstrasse 3-5, D-5100 Aachen (DE)**
Erfinder: **Pietsch, Michael, Zinnstrasse 2, D-5370 Kall (DE)**
Erfinder: **Weirich, Walter, Dr., Bismarckstrasse 59, D-5100 Aachen (DE)**

ACTORUM AG

## Beschreibung

Die Erfindung bezieht sich auf ein Verfahren zur Abtrennung von Wasserstoff aus Gasmischungen durch Diffusion durch eine nichtporöse Membran aus einer Titanlegierung, sowie auf eine Vorrichtung zur Durchführung des Verfahrens und eine dafür geeignete Membran.

Die Abtrennung von Wasserstoff aus Gasgemischen durch Diffusion durch eine Diffusionsmembran oder -wand aus Palladium ist bekannt. Man kennt auch bereits Diffusionswände aus anderen wasserstoffdurchlässigen Materialien, die nur auf der Gaszufuhrseite bzw. der mit der Gasmischung beaufschlagten Seite mit Palladium oder Palladiumlegierungen belegt sind. So werden gemäss der US-PS 3 407 571 Diffusionswände aus beispielsweise Stahl verwendet, die primärseitig mit einer dünnen Palladiumschicht oder Palladiumlegierung wie z.B. Palladium-Silber-Legierung mit bis zu 60% Silber belegt sind. Zur Beschleunigung der Diffusion sollen solche Wände insbesondere bei erhöhter Temperatur angewandt werden, die bis etwa 820°C reichen kann, wobei Temperaturen um 150 bis 260°C bevorzugt sind. Ferner soll insbesondere eine Druckdifferenz zwischen Primär- und Sekundärseite aufrechterhalten werden, die zumindest bei etwa 0,1 MPa liegt und vorzugsweise bis etwa 10 MPa reichen kann.

Gemäss der US-PS 1 174 631 soll die Abtrennung von Wasserstoff aus Gasgemischen durch Diffusion durch eine Platin- oder Palladiumwand mit poröser Keramikunterlage kontinuierlich und besonders wirtschaftlich ablaufen, wenn der nach der Diffusion freigesetzte Wasserstoff fortgeleitet wird.

Bei der praktischen Durchführung solcher Verfahren zur Abtrennung von Wasserstoff durch Diffusion durch nichtporöse Trennwände, die lediglich für Wasserstoff durchlässig sind, treten nun insbesondere bei Betrieb bei erhöhten Temperaturen und bei der Abtrennung in Form von leichtem Wasserstoff oder seinen Isotopen, wie sie zum Beispiel im primären Kühlgas eines Kernreaktors auftreten, Schwierigkeiten auf, da über längere Zeiten hinweg selbst geringe Verunreinigungen der primären oder sekundären Räume mit Wasserdampf oder oxidierenden Verbindungen zu Störungen führen, wie etwa Oxidschichtbildungen (insbesondere auf der Sekundärseite) mit entsprechender Hemmwirkung auf die Diffusion oder einer negativen Beeinflussung der Diffusionsvorgänge überhaupt; und ferner neigen die palladium-haltigen Schichten bei erhöhter Temperatur über längere Zeiten hinweg zum Eindiffundieren in die Unterlage, so dass die gewünschte Schutz- und Dissoziationswirkung mit der Zeit nachlässt. Reine Palladiumfolien oder Palladium homogen enthaltende Folien auf einer porösen Unterlage müssen relativ dick ausgeführt werden, um die Druckdifferenz zwischen Primär- und Sekundärseite aufnehmen zu können. Dies stellt auch in Bezug auf die Materialkosten keine preiswerte Lösung dar. Dick ausgeführte Palladium enthaltende Folien sind für die Wasserstoffdiffusion im übrigen sogar schlechter geeignet als dickere Folien aus anderen Materilien.

Aus der FR-A-2 218 281 ist ein Wasserstoffdiffusionsmembran bekannt, die durch eine Nickeltitanlegierung mit mehr als 50 Mol-% Nickel gebildet wird und insbesondere aus $TiNi_3$ besteht. Die Oberfläche der Membran kann mit einem Wasserstoffübertragungskatalysator versehen sein, der insbesondere durch einen Überzug aus TiNi und/oder $Ti_2Ni$ mit einem Nickelanteil von höchstens 50 Atom% gebildet wird. Als Membran selbst werden TiNi und $Ti_2Ni$ dagegen wegen ihrer hohen Wasserstoffaufnahme und geringen Wasserstoff-Diffusionskoeffizienten im Vergleich zum $TiNi_3$ abgelehnt.

Bei praktischer Verwendung solcher $TiNi_3$-Membranen bei erhöhten Temperaturen tritt relativ rasch eine Versprödung durch die Aufnahme von Wasserstoff auf.

Aufgabe der Erfindung ist daher die Bereitstellung eines Verfahrens zur Wasserstoffabtrennung aus Gasgemischen mit Hilfe eines metallischen Membranmaterials, das eine effektive Permeation ermöglicht und dessen Trennwirkung auch bei langen Betriebszeiten anhält, ohne dass für die Trennwände überhaupt Edelmetalle der Platingruppe verwendet werden.

Diese Aufgabe wird gemäss der Erfindung durch ein Verfahren der eingangs genannten Art gelöst, das dadurch gekennzeichnet ist, dass die Abtrennung des Wasserstoffs entweder über eine Membran aus TiNi (Atomverhältnis 1:1) bei Temperaturen über 300°C und Wasserstoffpartialdrucken bis zu 3 MPa oder über eine Membran aus TiAg (Atomverhältnis 1:1) bei Temperaturen von 300 bis 600°C und einem Wasserstoffpartialdruck von maximal 1 KPa erfolgt. Überraschenderweise wurde nämlich gefunden, dass gerade TiNi, dessen Diffusionskoeffizient bei Zimmertemperatur in der Gegend von $10^{-11}$ cm$^2$/s liegt, bei Temperaturen über 300°C hohe Wasserstoffpermeationsraten zulässt, die etwa 1/10 der Werte von Palladium erreichen und dass auch TiAg bei erhöhter Temperatur als Material für Wasserstoffdiffusionsmembranen sehr nützlich ist.

Die erfindungsgemäss zu verwendenden Titanlegierungen werden in Form von dünnen Blechen oder Folien eingesetzt, die z.B. nach dem bekannten Verfahren zur Verarbeitung amorpher Metalle (s. «Techn. Mitt. Krupp. Forsch.-Ber.» Bd 40 (1982) Heft 3, Seiten 67–71) erhältlich sind, indem die unter Schutzgas erzeugte leicht überhitzte Schmelze aus einer Schlitzdüse auf eine schnell rotierende (etwa 30 bis 40 m/s) Kupferwalze von Zimmertemperatur aufgespritzt wird. Auf diese Weise lassen sich dünne Membranen bis herunter zu etwa 25 bis 50 µm herstellen. Laborversuche wurden mit Scheiben von etwa 100 bis 200 µm Dicke durchgeführt, die aus Gussblöcken mit der Diamantsäge geschnitten und durch Abfunken und/oder Abätzen auf die gewünschte Dicke gebracht wurden. Durch Warmwalzen erhält man Folien bis herunter zu etwa 3 mm Dicke, die für die Wasserstoffdiffusion – je nach vorzusehenden Bedingungen – noch eingesetzt werden können.

Die genannten TiNi- oder TiAg-Legierungen zeichnen sich durch folgende vorteilhafte Eigenschaften aus:

– sie sind nicht spröde, so dass elastische Bleche oder Folien hergestellt werden können, die auch beim Gebrauch nicht verspröden;

– ihre Permeationsraten sind ähnlich günstig wie die von Palladium und seinen Legierungen;

– die Wasserstoffaufnahme wird durch die gleichzeitige Anwesenheit verschiedener Verunreinigungen im Gas auch bei längeren Betriebszeiten nicht unterdrückt.

Die Zustandsdiagramme der Systeme Ti/Ni und Ti/Ag lehren, dass diese Legierungen bei einem Atomverhältnis von etwa 1:1 einen Homogenitätsbereich aufweisen. In diesem Bereich sind die Legierungen nicht spröde, sondern elastisch und verformbar. Verunreinigungen bis zu etwa 0,5% stören nicht.

Es wurde nun gefunden, dass sich diese Legierungen in Wasserstoff-Gasgemischen, die Stickstoff, Wasser und Kohlenstoffverbindungen enthalten, bei erhöhter Temperatur selbst aktivieren, so dass das Wasserstoffmolekül dissoziiert und H mit ähnlichen Diffusionsraten durch die Membran diffundiert, wie im Fall von palladiumhaltigen Membranen. Diese Aktivierung der Oberfläche bleibt dauerhaft erhalten.

So wurde beispielsweise eine Membran aus TiNi primärseitig mit einem $H_2$-Gasgemisch aus Wasserstoff, $CO_2$ und Stickstoff bei 400°C beaufschlagt. Nach einer anfänglichen Verminderung der Permeation wurden schon nach kurzer Zeit wieder Wasserstoff-Permeationsraten erhalten, die denen von primärseitig reinem $H_2$ bei gleichem Partialdruck entsprechen. Sie blieben dann über mehrere Wochen konstant bis zum Ende des Versuchs.

Bei Titan-Silber (1:1) wurde ein ähnliches Verhalten gefunden, wobei die Permeationsraten grösser waren als die von reinem Palladium.

Die erfindungsgemässen Diffusionsmembranen werden zur Abtrennung von Wasserstoff aus Gasgemischen bei Temperaturen über 300°C angewandt, und zwar kann eine TiNi-Membran von etwa 0,01 bis 1 mm Dicke bei Wasserstoffpartialdrucken bis zu ~ 3 MPa benutzt werden, die beliebig niedrig sein können. Zweckmässigerweise wird ein $H_2$-Druckgefälle von zumindest etwa 10, insbesondere etwa 1:10 bis etwa 1:100 zwischen Primär- und Sekundärseite aufrechterhalten.

Ein solches Druckgefälle kann durch Absaugen des abgetrennten Wasserstoffs auf der Sekundärseite erreicht werden oder auch dadurch, dass man den Wasserstoff auf der Sekundärseite durch Reaktion mit einem Reaktionspartner abfängt und abtransportiert. Als zweckmässig haben sich dabei eine hydridhaltige Schmelze aus Alkali- und/oder Erdalkalimetallen bzw. -metallmischungen erwiesen.

Übliche Membranstärken liegen zwischen etwa 10 μm und etwa 1 bis 2 mm.

TiAg ist wegen seiner günstigen mechanischen Eigenschaften und besonders hohen Permeationsraten in Bereichen attraktiv, wo keine hohen Wasserstoffpartialdrucke zur Anwendung kommen, so dass die Bildung einer Hydridphase vermieden werden kann. Aus diesem Grunde werden TiAg-Membranen bei Wasserstoffpartialdrucken von etwa 1 KPa bei etwa 600°C angewandt und bei noch höheren Wasserstoffpartialdrucken nur im Temperaturbereich von oberhalb etwa 600°C. Bei 300°C muss der Wasserstoffpartialdruck unter etwa 1 Pa gehalten werden. Durch Gleichgewichtsmessungen wurde sichergestellt, dass im System TiNi auch bei höheren Wasserstoffpartialdrucken von mehreren bar keine Hydridphase ausgebildet wird.

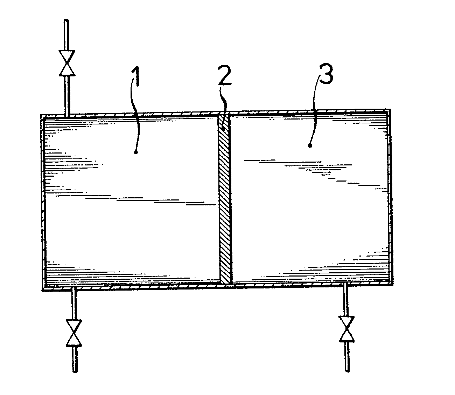

Die beigefügte Zeichnung zeigt schematisch eine Vorrichtung zur Abtrennung von Wasserstoff aus einer Gasmischung, die in den Raum 1 eingeleitet wird. Der Wasserstoff diffundiert durch die nicht poröse Membran 2 in den Raum 3, aus dem er abgesaugt bzw. abtransportiert wird.

**Patentansprüche**

1. Verfahren zur Abtrennung von Wasserstoff aus Gasmischungen durch Diffusion durch eine nicht poröse Membran aus einer Titanlegierung, dadurch gekennzeichnet, dass die Abtrennung des Wasserstoffs entweder über eine Membran aus TiNi (Atomverhältnis 1:1) bei Temperaturen über 300°C und Wasserstoffpartialdrucken bis zu 3 MPa oder über eine Membran aus TiAg (Atomverhältnis 1:1) bei Temperaturen von 300 bis 600°C und einem Wasserstoffpartialdruck von maximal 1 KPa erfolgt.

2. Verfahren nach Anspruch 1, dadurch gekennzeichnet, dass eine Membran von 0,01 bis 2 mm Dicke verwendet wird.

3. Verfahren nach Anspruch 1 oder 2, dadurch gekennzeichnet, dass man den Wasserstoff auf der Sekundärseite der Membran gasförmig abzieht.

4. Verfahren nach Anspruch 1 oder 2, dadurch gekennzeichnet, dass man den Wasserstoff auf der Sekundärseite der Membran durch chemische Reaktion abfängt und die gebildeten Verbindungen abtransportiert.

5. Verfahren nach Anspruch 4, dadurch gekennzeichnet, dass man zum Abfangen des Wasserstoffs eine hydridhaltige Schmelze aus Alkaliund/oder Erdalkalimetallen bzw. -metallmischungen verwendet.

6. Vorrichtung zum Abtrennen von Wasserstoff aus einer Gasmischung durch Diffusion durch eine nicht poröse Membran, gekennzeichnet durch eine Diffusionsmembran aus TiNi oder TiAg im Atomverhältnis 1:1.

7. Nicht-poröse Wasserstoffdiffusions-Membran, dadurch gekennzeichnet, dass sie aus TiAg im Atomverhältnis 1:1 gebildet ist.

**Claims**

1. Method for separating hydrogen from gas mixtures by diffusion through a non-porous membrane made of a titanium alloy, characterised in that the separating off of the hydrogen is effected either by means of a membrane made of TiNi (atomic ratio 1:1) at temperatures above 300°C and hydrogen partial pressures up to 3 MPa or by means of a membrane of TiAg (atomic ratio 1:1) at temperatures of 300 to 600°C and a hydrogen partial pressure of at the most 1 KPa.

2. Method according to claim 1, characterised in that a membrane with a thickness of 0.01 to 2 mm is used.

3. Method according to claim 1 or 2, characterised in that the hydrogen is removed in gas form at the secondary side of the membrane.

4. Method according to claim 1 or 2, characterised in that the hydrogen is collected at the secondary side of the membrane by chemical reaction, and the compounds formed are transported away.

5. Method according to claim 4, characterised in that a hydride-containing melt of alkali metals and/or alkaline earth metals or metal mixtures is used for collecting the hydrogen.

6. Apparatus for separating hydrogen from a gas mixture by diffusion through a non-porous membrane, characterised by a diffusion membrane of TiNi or TiAg in the atomic ratio of 1:1.

7. Non-porous hydrogen-diffusion membrane, characterised in that it is formed of TiAg in the atomic ratio 1:1.

**Revendications**

1. Procédé pour séparer de l'hydrogène dans des mélanges gazeux, par diffusion à travers une membrane non poreuse en un alliage de titane, caractérisé en ce qu'il consiste à effectuer la séparation de l'hydrogène soit par une membrane en TiNi (rapport atomique 1:1) à des températures supérieures à 300°C et sous des pressions partielles d'hydrogène allant jusqu'à 3 MPa, soit par une membrane en TiAg (rapport atomique 1:1) à des températures de 300 à 600°C, et sous une pression partielle d'oxygène de 1 KPa au maximum.

2. Procédé suivant la revendication 1, caractérisé en ce qu'il consiste à utiliser une membrane d'une épaisseur de 0,01 à 2 mm.

3. Procédé suivant la revendication 1 ou 2, caractérisé en ce qu'il consiste à soutirer l'hydrogène sous forme gazeuse du côté secondaire de la membrane.

4. Procédé suivant la revendication 1 ou 2, caractérisé en ce qu'il consiste à recueillir l'hydrogène du côté secondaire de la membrane par réaction chimique et à évacuer les composés formés.

5. Procédé suivant la revendication 4, caractérisé en ce qu'il consiste à utiliser pour recueillir l'hydrogène, une masse fondue hydrurée de métaux alcalins et/ou de métaux alcalino-terreux ou de mélanges de métaux.

6. Dispositif pour séparer l'hydrogène dans un mélange de gaz par diffusion dans une membrane non poreuse, caractérisé par une membrane de diffussion en TiNi ou en TiAg en le rapport atomique 1:1.

7. Membrane non poreuse de diffusion de l'hydrogène, caractérisée en ce qu'elle est en TiAg dans le rapport atomique 1:1.